# EUROPÄISCHE PATENTANMELDUNG

(11) **EP 1 652 755 A1**
(43) Veröffentlichungstag der Anmeldung: **03.05.2006**
(21) Anmeldenummer: 04405679.4
(22) Anmeldetag: 04.11.2004
(51) Int. Cl.: B62D 25/10

(54) **Verschlussklappe**

(30) Priorität: 29.10.2004 CH 17892004
(71) Anmelder: Alcan Technology & Management Ltd., 8212 Neuhausen am Rheinfall (CH)
(72) Erfinder: Wieschermann, Jochen, 88682 Salem (DE); Waldeck, Klaus-Dieter, 8172 Niederglatt (CH)

(57) **Zusammenfassung**

Die Erfindung betrifft eine Verschlussklappe (11) in einer Aussenwand eines Fahrzeuges, insbesondere eines Reisebusses, zum Verschliessen einer Fahrzeugöffnung, enthaltend ein Klappenelement (1) und eine auf dem Klappenelement (1) angeordnete Verstärkungsstruktur. Die Erfindung zeichnet sich dadurch aus, dass die Verstärkungsstruktur auf das Klappenelement (1) aufgeklebte Eckelemente (2a, 2b, 2c, 2d) umfasst, welche über längslaufende Profilteile (3a, 3b, 3c, 3d) miteinander zu einer Rahmenstruktur verbunden sind.

## Beschreibung

Vorliegende Erfindung betrifft eine Verschlussklappe, enthaltend ein Klappenelement und eine auf dem Klappenelement angeordnete Verstärkungsstruktur. Die Erfindung betrifft auch ein Verfahren zur Herstellung der Verschlussklappe sowie die Verwendung der Verschlussklappe.

Verschlussklappen an der Aussenseite von Omni- bzw. Reisebussen zum Verschliessen von Öffnungen, wie z.B. Gepäckraumöffnungen, sind bekannt. Die Verschlussklappen enthalten in der Regel ein, der Aussenkontur des Fahrzeuges angepasstes Klappenelement aus einem Blech oder einer Platte sowie einen, innenseitig, das heisst zum Fahrzeuginneren hin, auf dem Klappenelement angeordneten und mit diesem verbundenen Verstärkungsrahmen zur Erhöhung der Torsionssteifigkeit der Verschlussklappe.

Der Verstärkungsrahmen wurde bis anhin in separaten Montageschritten hergestellt und als Komplettrahmen auf das Klappenelement aufgesetzt und mit diesem verbunden. Die Herstellung solcher Verschlussklappen ist aus diesem Grunde ziemlich aufwändig und kostenintensiv.

Der Erfindung liegt deshalb die Aufgabe zugrunde, eine stabile, torsionssteife Verschlussklappe vorzuschlagen, welche kostengünstig und mit möglichst wenig Montageschritten herzustellen ist.

Die Lösung der Aufgabe zeichnet sich dadurch aus, dass die Verstärkungsstruktur einzeln auf das Klappenelement aufgebrachte Rahmenelemente umfasst, welche zu einer Rahmenstruktur verbunden sind.

Die Rahmenelemente beinhalten bevorzugt Eckelemente sowie längslaufende Profilteile und fallweise ein Versteifungsprofil, insbesondere eine sogenannte Schlosstraverse.

Die Eckelemente sind hierzu bevorzugt über eine flächige Klebverbindung mit dem Klappenelement verbunden, d.h. auf dieses geklebt. Die Profilteile sind ebenfalls bevorzugt über eine flächige Klebverbindung mit den Eckelementen verbunden. Ferner können die Profilteile über eine flächige Klebverbindung auch mit dem Klappenelement verbunden sein.

Der Klebstoff ist bevorzugt ein wärmebeständiger Klebstoff. Die Klebverbindung zwischen Rahmenelementen untereinander und mit dem Klappenelement ist besonders bevorzugt aus einem Reaktionskleber. Dieser kann bsp. ein Epoxy-, Acrylat- oder ein Polyurethankleber sein.

Das Klappenelement besteht vorzugsweise aus einem mehrschichtigen Plattenmaterial, insbesondere aus einer Sandwich-Platte, enthaltend eine Kernschicht sowie beidseitig davon angeordnete Deckschichten. Die Kernschicht kann aus einem Kunststoff, bsp. aus einem porenarmen Kunststoff oder einem Schaumstoff bestehen. Die Deckschichten können aus Metall bzw. Blech, wie Stahl oder Aluminium bzw. einer Aluminiumlegierung, oder aus Kunststoffplatten, bsp. aus faserverstärkten Kunststoffplatten, sein.

Das mehrschichtige Plattenmaterial zeichnet sich gegenüber herkömmlichen Blechelementen durch eine erhöhte Biege- bzw. Torsionssteifigkeit aus.

Das Plattenelement besteht besonders bevorzugt aus einer Verbundplatte umfassend einen wabenförmigen Kern sowie beidseitig davon angeordnete Deckschichten, welche über eine Klebverbindung mit dem Kern verbunden sind. Eine oder beide Deckschichten sind bevorzugt Deckbleche aus einem Metall, bsp. aus Stahl und insbesondere aus Aluminium oder einer Aluminiumlegierung. Der wabenförmige Kern kann ebenfalls aus einem Metall, bsp. aus Stahl und insbesondere aus Aluminium oder einer Aluminiumlegierung, sein.

Der wabenförmige Kern und insbesondere die Deckschichten können auch aus einem Kunststoff sein. Die Deckschichten können bsp. aus einem faserverstärkten Kunststoff sein.

Das Klappenelement kann bsp. eine Dicke von 3 - 10 mm, insbesondere von 5 - 7 mm aufweisen. Das Plattenelement kann ferner eine Breite von 0.5 - 2 m, insbesondere von 0.8 - 1.5 m, und eine Länge von 0.5 - 3 m, insbesondere von 1.0 - 1.7 m aufweisen.

Die Eckelemente sind bevorzugt als Eckwinkel ausgebildet und enthalten eine erste Eckelementwand, welche parallel zur Plattenoberfläche verläuft und dieser anliegt sowie eine zweite Eckelementwand, welche in einem Winkel, vorzugsweise in einem rechten Winkel zur ersten Eckelementwand liegt und von der Plattenoberfläche aufragt. Die zweite Eckelementwand weist ferner zur Ausbildung des Eckwinkels eine entsprechende Biegung von vorzugsweise 90° auf.

Die Eckwinkel weisen besonders bevorzugt einen U-förmigem Querschnitt auf und enthalten dazu eine dritte Eckelementwand, welche in Distanz und parallel zur ersten Eckelementwand verläuft, wobei die zweite Eckelementwand die erste und dritte Eckelementwand verbindet.

Die Eckelemente können aus einem Metall, bsp. aus Stahl und insbesondere aus Aluminium oder einer Aluminiumlegierung bestehen. Ferner können die Eckelemente auch aus einem Kunststoff, insbesondere aus einem verstärkten Kunststoff bestehen.

Die Eckelemente können bsp. aus einem Walzprodukt, wie Blech, oder einem Strangpressprodukt bestehen. Ferner können die Eckelemente auch Gussteile sein.

Die Profilteile können als offene oder geschlossene Hohlprofilteile ausgebildet sein. Die Profilteile sind bevorzugt als offene Profile, vorzugsweise als Profilleisten, insbesondere als Winkelleisten ausgebildet.

Die Profilteile bilden vorzugsweise wenigstens zwei Profilwände aus, wobei eine erste Profilwand parallel zur Plattenoberfläche verläuft und dieser anliegt. Eine zweite Profilwand ist in einem Winkel, insbesondere in einem rechten Winkel, zur ersten Profilwand angeordnet und steht von der Plattenoberfläche ab.

In besonders bevorzugter Ausführung der Erfindung sind die Profilteile als sogenannte Z-Profile ausgebildet, enthaltend zwei gegenüberliegende parallel zur Plattenoberfläche verlaufende erste und dritte Profilwände sowie eine, die erste und dritte Profilwand in einem Winkel, vorzugsweise im rechten Winkel, verbindende zweite Profilwand, welche von der Plattenoberfläche aufragt.

Die Profilteile können überdies auch als U-Profile mit einem der Plattenoberfläche aufliegenden Schenkel ausgebildet sein.

Die Profilteile können aus einem Metall, bsp. aus Stahl und insbesondere aus Aluminium oder einer Aluminiumlegierung bestehen. Ferner können die Profilteile auch aus einem Kunststoff, insbesondere aus einem verstärkten Kunststoff bestehen. Die Profilteile können bsp. aus einem gebogenen bsp. abgekanteten Walzprodukt bestehen. Dies kann bsp. ein Abkantblech sein. In bevorzugter Ausführung der Erfindung sind die Profilteile jedoch Strangpressprodukte.

Die flächige Klebverbindung zwischen Profilteil und Eckelement wird bevorzugt zwischen der zweiten Profilwand und der zweiten Eckelementwand ausgebildet. Die besagte Verbindung kann auch zwischen der dritten Profilwand und der dritten Eckelementwand ausgebildet werden. Ferner können die Bauteile auch über beide Verbindungsflächen miteinander verbunden sein.

Die Eckelemente und Profilteile sind gemäss einer besonders bevorzugten Anordnung zu einem rechteckförmigen Rahmen gefügt, wobei jeder Ecke des Rahmens ein Eckelement zugeordnet ist.

Der Rahmen dient einerseits zur Versteifung der Verschlussklappe und insbesondere zur Erhöhung der Torsionssteifigkeit und andererseits als Anbindungspunkt für diverse funktionellen Elemente.

Solche funktionellen Elemente können bsp. ein Versteifungsprofil, welches bsp. als Schlosstraverse ausgelegt ist, ein Verkleidungselement, eine Gelenk- bzw. Scharnierverbindung oder ein Öffnungs- bzw. Schliessmechanismus mit Führungselementen wie Führungsschienen, Laufschienen, Schlitten, Federstützen oder Teleskopstangen, sein. Dazu können an der Rahmenstruktur Anbindungsteile wie Laschen oder auch Durchbrüche bzw. Lochungen angebracht bzw. vorgesehen sein.

Findet die erfindungsgemässe Verschlussklappe Verwendung als Schwenkklappe, so enthält ein Profilteil der Rahmenstruktur, insbesondere eine parallel zur Plattenoberfläche verlaufende Profilwand dieses Profilteils, bevorzugt eine Anbindungstruktur für eine Drehgelenkverbindung, insbesondere für ein Scharnier. Die Anbindungsstruktur enthält hierzu bevorzugt querschnittlich ringförmige Durchgänge zum Einführen eines Scharnier-Stiftes.

In bevorzugter Weiterbildung der Erfindung sind Positionierhilfen vorgesehen, welche der Positionierung und Ausrichtung von Rahmenelementen in eine definierte Lage auf dem Klappenelement dienen. In der Regel brauchen nicht sämtliche Rahmenelemente mittels Positionierhilfen auf dem Klappenelement festgelegt zu werden. So genügt es beispielsweise, wenn einzelne, mehrere oder sämtliche Ekkelemente mittels Positionierhilfen in einer definierten Lage auf dem Klappenelement festgelegt werden. Die Profilteile ihrerseits lassen sich dann über die Eckelemente positionieren und festlegen. Selbstverständlich können auch einzelne, mehrere oder sämtliche Profilteile mittels Positionierhilfen am Klappenelement festgelegt sein. Die Eckelemente ihrerseits lassen sich dann über die Profilteile positionieren und festlegen.

Es ist auch möglich, sämtliche Rahmenelemente über Positionierhilfen auf dem Klappenelement festzulegen, auch wenn dies nicht zwingend notwendig ist. Aus Kosten- und Zeitgründen werden jedoch bevorzugt nur gerade so viele Rahmenelemente mittels Positionierhilfen auf dem Klappenelement ausgerichtet, wie notwendig sind, um die gesamte Rahmenstruktur in einer vordefinierten Lage ohne zusätzlichen Richthilfen auf dem Klappenelement zu montieren.

Das Klappenelement enthält in Weiterbildung der Erfindung bevorzugt Ausnehmungen, insbesondere Bohrungen, zur Aufnahme von oben genannten Positionierhilfen.

Die Positionierhilfen enthalten bevorzugt Stiftkörper, welche zwecks Ausrichtung der Rahmenelemente durch Öffnungen, insbesondere Bohrungen, in den Rahmenelementen, insbesondere in den Eckelementen, geführt sind. Die Öffnungen, bzw. Bohrungen sind bevorzugt an ersten, dem Klappenelement anliegenden Wänden der Rahmenelemente, wie Eckelemente oder Profilteile, angebracht.

Gemäss einer bevorzugten Ausführung der Erfindung sind die Positionierhilfen in die Ausnehmungen bzw. Bohrungen des Klappenelementes gesteckt und greifen beim Aufsetzen der Rahmenelemente zwecks Positionierung derselbigen auf dem Klappenelement mit ihrem stiftförmigen Körper durch die Öffnungen bzw. Bohrungen in den Rahmenelementen, insbesondere in den Eckelementen.

Gemäss einer alternativen Ausführung der Erfindung sind die Positionierhilfen an Rahmenelementen, insbesondere an den Eckelementen angebracht, und greifen beim Aufsetzen der Rahmenelemente auf das Klappenelement zwecks Positionierung derselbigen mit ihren Endabschnitten in die Ausnehmungen bzw. Bohrungen im Plattenelement ein.

Die Bohrungen im Klappenelement und/oder in den Rahmenelementen können Gewindebohrungen sein, wobei die Positionierhilfen entsprechend verschraubt sind. Die Positionierhilfen werden jedoch bevorzugt durch die besagten Ausnehmungen bzw. Bohrungen durch- bzw. eingesteckt. Die Positionierhilfen können in den Ausnehmungen im Klappenelement oder in den Rahmenelementen verklebt oder durch eine spezifische geometrische Auslegung darin verankert sein.

Die Positionierhilfen enthalten in einer bevorzugten Ausführung der Erfindung ein Kopfteil, mit welchem diese in die Ausnehmungen im Klappenelement gesteckt sind, wobei das Kopfteil einen grösseren Durchmesser aufweist als die durchstossene Öffnung im Rahmenelement.

Das Kopfteil ragt unter Ausbildung einer Anschlagfläche zur anliegenden Wand des Rahmenelementes bevorzugt um ein gewisses Mass über die Oberfläche des Klappenelementes hinaus und wirkt auf diese Weise als Distanzhalter zwischen Rahmenelement und Klappenelement. Der zwischen den beiden Elementen erzeugte Abstand definiert den Klebstoffspalt, bzw. die Dicke der Klebstoffschicht.

In einer alternativen Ausführung der Erfindung werden die Positionierhilfen zwischen Rahmenelement und Klappenelement mit Unterlagsscheiben bzw. Distanzscheiben versehen. Die Unterlagsscheiben bzw. Distanzscheiben übernehmen hier die Funktion des Distanzhalters.

Die Positionierhilfen können so konzipiert sein, dass diese entweder permanent in die Rahmenkonstruktion integriert oder nach der Positionierung und Festlegung der Rahmenelemente wieder entfernt werden.

Die oben genannten Positionierhilfen können aus Metall oder aus einem Kunststoff sein. Sie dienen bevorzugt lediglich der Positionierung und Ausrichtung der betreffenden Funktionselemente und nicht der Verbindung derselbigen mit dem Plattenelement.

Die Rahmenelemente umfassen in Weiterentwicklung der Erfindung überdies ein Versteifungsprofil, welches bsp. in Ausführung einer sogenannten Schlosstraverse zur Anbindung eines Schlosses vorliegen kann. Das Versteifungsprofil verläuft zweckmässig innerhalb des Verstärkungsrahmens parallel zu einer der Rahmenseiten. Das Versteifungsprofil weist bevorzugt einen hutförmigen Profilquerschnitt auf, mit zwei parallel zur Plattenoberfläche verlaufenden und dieser aufliegenden, randseitigen Profilwänden. Das Versteifungsprofil ist mit seinen randseitigen Profilwänden bevorzugt, bsp. über eine flächige Klebverbindung, mit der Plattenoberfläche verbunden.

Das Versteifungsprofil ist ferner bevorzugt über eine flächige Klebverbindung mit den angrenzenden Profilteilen der Rahmenstruktur verbunden.

Das Versteifungsprofil kann aus einem Kunststoff, insbesondere faserverstärkten Kunststoff oder Metall, bsp. aus Stahl und insbesondere aus Aluminium oder einer Aluminiumlegierung, bestehen. Das Versteifungsprofil besteht besonders bevorzugt aus einem abgekanteten Blech.

Das Versteifungsprofil kann ebenfalls mittels der oben ausführlich beschriebenen Positionierhilfen auf dem Klappenelement festgelegt sein, wobei sämtliche oben beschriebene Ausführungsvarianten auch auf das Versteifungsprofil anwendbar sind.

Die Verschlussklappe findet insbesondere Verwendung in bzw. an Fahrzeugen für den Transport von Personen oder Gütern, insbesondere in oder an Massentransportmitteln für den Personen- oder Gütertransport. Solche Massentransportmittel können sein: Schienenfahrzeuge, Strassenfahrzeuge, wie Lastkraftwagen, Busse, insbesondere Omnibusse bzw. Reisebusse, Flugzeuge oder Schiffe. Die erfindungsgemässe Verschlussklappe kann Verwendung finden, sowohl im Inneren wie auch in Aussenwandbereichen, insbesondere in vertikalen Aussenwänden, der genannten Fahrzeuge.

Die erfindungsgemässe Verschlussklappe kann auch in der Architektur wie z. B. im Hochbau oder im Innenausbau sowie im Möbelbau eingesetzt werden.

Die Verschlussklappe findet Verwendung zum Verschliessen von Stauräumen, wie z. B. eines Gepäckraumes, zum Verschliessen von Öffnungen, welche den Zugang zu technischen Einrichtungen garantieren, zum Verschliessen von Ein- oder Ausstiegen, bzw. zum Verschliessen von Be- oder Entladeöffnungen.

Die erfindungsgemässe Verschlussklappe findet besonders bevorzugt Verwendung in der Aussenwand eines Busses, insbesondere eines Omni- oder Reisebusses, zum Verschliessen eines Stauraumes, insbesondere eines Gepäckraumes.

Die erfindungsgemässe Verschlussklappe kann bsp. als Hubklappe, welche ohne Scharnierverbindung auskommt, oder als Schwenkklappe eingesetzt werden.

Die Erfindung betrifft ferner ein Verfahren zur Herstellung einer Verschlussklappe der oben beschriebenen Art.

Das Verfahren zeichnet sich durch folgende Herstellungsschritte aus:
- Bereitstellen eines Klappenelementes;
- Aufsetzen und Positionieren der einzelnen Rahmenelemente auf das Klappenelement;
- Verkleben der Rahmenelemente mit dem Klappenelement und/oder mit den benachbarten Rahmenelementen zu einer Rahmenstruktur.

Eine Weiterentwicklung des Verfahrens zeichnet sich durch folgende Schritte aus:
- Bereitstellen eines Klappenelementes;
- Aufsetzen und Positionieren der Eckelemente auf das Klappenelement;
- Verkleben der Eckelemente mit dem Klappenelement;
- Aufsetzen und Positionieren der Profilteile;
- Verkleben der Profilteile mit den Eckelementen und/oder dem Klappenelement.

In Weiterbildung der Erfindung können folgende zusätzliche Schritte vorgesehen sein:
- Aufsetzen und Positionieren eines Verstärkungsprofils, insbesondere einer Schlosstraverse, auf das Klappenelement;
- Verkleben des Verstärkungsprofils mit dem Klappenelement und/oder den Profilteilen.

Das Verstärkungsprofil wird bevorzugt vor den Profilteilen auf das Klappenelement aufgesetzt, positioniert und mit diesem verklebt. Das Verstärkungsprofil kann zusammen mit den Eckelementen oder im Anschluss an die Eckelemente auf das Klappenelement aufgesetzt, positioniert und verklebt werden. In bevorzugter Ausführung der Erfindung übergreifen die Profilteile das Verstärkungsprofil mit ihrer dritten Profilseite.

In bevorzugter Ausführung des Verfahrens werden im Klappenelement vor der Montage des Verstärkungsrahmens Ausnehmungen, insbesondere Bohrungen, angebracht. Die Ausnehmungen bzw. Bohrungen dienen der Einbringung von Positionierhilfen zur Ausrichtung und Festlegung von Rahmenelementen, insbesondere der Eckelemente und gegebenenfalls eines Verstärkungsprofils. Dieser Schritt kann zusammen mit dem Zuschneiden des Plattenmaterials zu Klappenelementen geschehen.

Im Anschluss an obigen Verfahrensschritt werden die Ausnehmungen bzw. Bohrungen im Klappenelement mit Positionierhilfen bestückt.

Die Einbringung von Bohrungen sowie die Bestückung des Plattenelementes mit Positionierhilfen geschieht bevorzugt vollautomatisch. Dieser Prozess ist vergleichbar mit der Bestückung von Platinen zur Herstellung von Leiterplatten.

Zur Positionierung der Rahmenelemente, insbesondere der Eckelemente bzw. des Verstärkungsprofils, werden die Rahmenelemente auf das Klappenelement aufgesetzt und in ihre vorgesehene Lage ausgerichtet, wobei die Positionierhilfen durch Öffnungen in den Rahmenelementen geführt werden. Die mittels Positionierhilfen in ihre vorgesehene Lage auf dem Klappenelement gebrachten Rahmenelemente werden anschliessend mit dem Klappenelement verklebt.

In einer alternativen Ausführung des Verfahrens werden die Rahmenelemente, insbesondere die Eckelemente und gegebenenfalls das Verstärkungsprofil, mit den Positionierhilfen bestückt. Die mit Positionierhilfen bestückten Rahmenelemente werden auf das Klappenelement aufgesetzt, wobei die Positionierhilfen in die vorgesehenen Ausnehmungen im Klappenelement eingreifen.

Nachdem jene, mittels Positionierhilfen auf das Klappenelement aufgebrachten Rahmenelemente, insbesondere die Eckelemente, fixiert sind, werden jene, ohne die genannten Positionierhilfen montierbaren Rahmenelemente, insbesondere die Profilteile, auf das Klappenelement aufgesetzt und, vorzugsweise mittels Klebverbindung, an das Klappenelement und/oder an die bereits befestigten Rahmenelemente fixiert, wobei die letzteren Rahmenelemente an den bereits fixierten Rahmenelementen ausgerichtet werden.

Die oben beschriebene Bauweise zeichnet sich durch den Vorteil aus, dass der Verstärkungsrahmen nicht mehr wie bis anhin vorgefertigt werden muss, sondern gleichzeitig mit dem Anbringen der einzelnen Rahmenelemente auf dem Plattenelement zusammengesetzt wird. Das Plattenelement dient hierzu als Montagehilfe und die beschriebenen Positionierhilfen ersetzen die Einspannvorrichtung zum Fügen des Rahmens. Montagevorrichtungen zur Herstellung des Verstärkungsrahmens werden somit überflüssig, wodurch eine höhere Flexibilität bei der Herstellung von Verschlussklappen mit Verstärkungsrahmen von unterschiedlicher Grösse erreicht wird.

Die erhöhte Eigensteifigkeit des mehrschichtigen Klappenelements vereinfacht den Montagevorgang zusätzlich, indem das Klappenelement selbst nicht abgestützt werden muss.

Durch die erfindungsgemässe Konstruktion fällt folglich die Rahmenvormontage weg, was eine erheblich Zeit- und Kosteneinsparung mit sich bringt. Ferner kann die Einbringung der Ausnehmungen im Klappenelement sowie deren Bestückung mit Positionierhilfen vollautomatisiert erfolgen, so dass eine zusätzliche Effizienzsteigerung erreicht wird.

Im folgenden wird die Erfindung beispielhaft und mit Bezug auf die beiliegenden Zeichnungen näher erläutert. Es zeigen:
- Fig. 1:: eine perspektivische Ansicht einer Verschlussklappe;
- Fig. 2a-d:: eine Darstellung der einzelnen Montageschritte;
- Fig. 3:: eine perspektivische Ansicht eines Plattenelements;
- Fig. 4:: Schnitt X - X durch die Verschlussklappe nach Fig. 1.

Die Verschlussklappe 11 enthält ein Plattenelement 1, vorzugsweise aus einem Sandwichmaterial, insbesondere einem Sandwichmaterial nach Fig. 3. Auf der zum Fahrzeuginneren zugewandten Seite des Plattenelements 1 ist eine Rahmenstruktur angeordnet, bestehend aus vier Eckwinkelstücken 2a, 2b, 2c, 2d, welche jeweils über Positionierhilfen 8a, 8d auf das Plattenelement 1 aufgesetzt, ausgerichtet und mittels einer Klebstoffverbindung mit diesem verbunden sind. Die Eckwinkelstücke 2a, 2b, 2c, 2d sind über Profilleisten 3a, 3b, 3c, 3d zu einer rechteckigen Rahmenstruktur miteinander verbunden. Die Profilleisten 3a, 3b, 3c, 3d enthalten erste Profilwände welche parallel zur Plattenoberfläche verlaufen und dieser aufliegen, sowie zweite Profilwände, welche in einem rechten Winkel zu den ersten Profilwänden angeordnet sind und von der Plattenoberfläche abstehen.

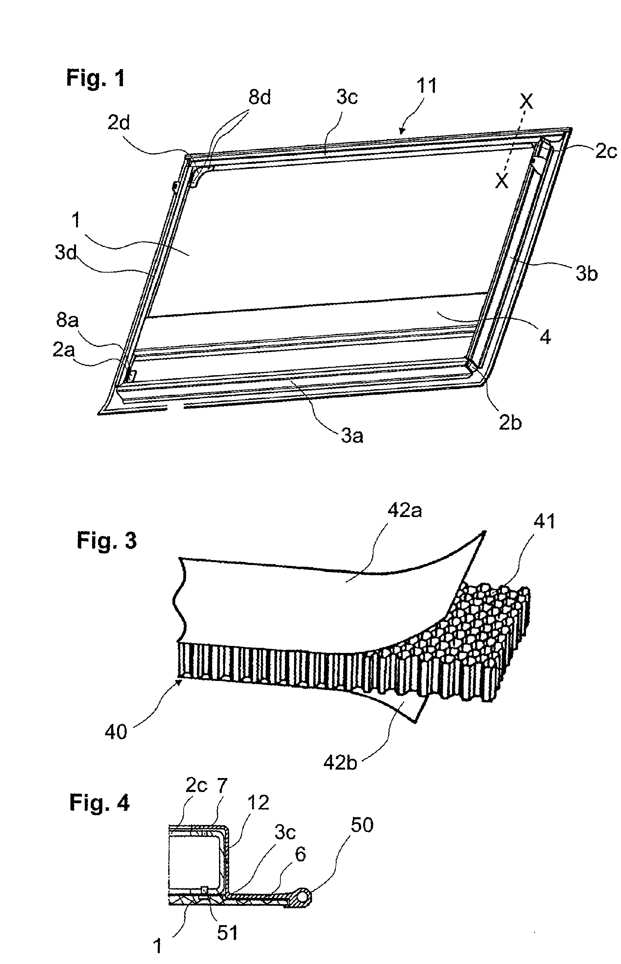

Die Profilleisten 3a, 3b, 3c, 3d sind bevorzugt über eine Klebverbindung mit den Eckwinkelstücken 2a, 2b, 2c, 2d verbunden. Hierzu sind die zweiten Profilwände der Profilleisten mit zweiten Eckelementwänden verklebt, welche parallel zu den zweiten Profilwänden verlaufen. Die Profilleisten 3a, 3b, 3c, 3d können ferner über die ersten Profilwände mittels einer Klebstoffverbindung mit dem Plattenelement 1 verbunden sein (Fig. 1).

Die Profilleisten 3a, 3b, 3c, 3d enthalten im weiteren dritte Profilwände, welche parallel zu den ersten Profilwänden verlaufen und gegenüber den ersten Profilwänden in entgegengesetzter Richtung von den zweiten Profilwänden abgewinkelt sind.

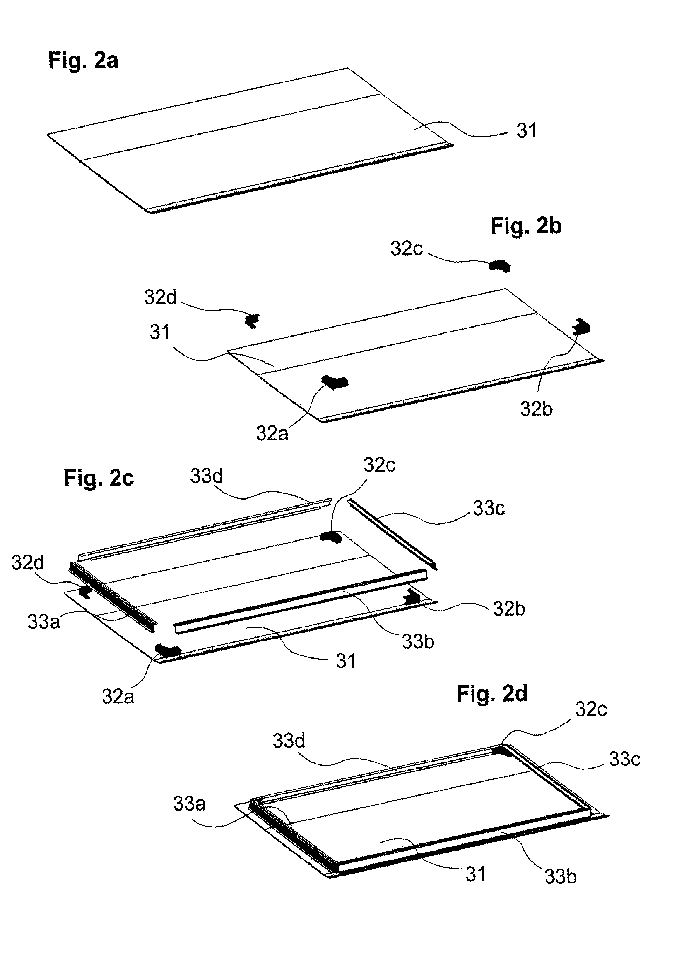

Fig. 2 zeigt die einzelnen Montage-Schritte zur Herstellung einer mit einer Rahmenstruktur verstärkten Verschlussklappe. Auf ein Plattenelement 31 (Fig. 2a) werden Eckwinkel 32a, 32b, 32c, 32d (Fig. 2b) aufgesetzt und über Positionierhilfen an ihre vorbestimmten Positionen gebracht und auf das Plattenelement aufgeklebt. Nachfolgend werden Profilleisten 33a, 33b, 33c, 33d auf das Plattenelement aufgesetzt (Fig. 2c) und an den Eckwinkeln 32a, 32b, 32c, 32d ausgerichtet und mit diesen zu einer rechteckigen Rahmenstruktur verklebt (Fig. 2d).

Fig. 3 zeigt ein Plattenelement 40 aus einem Wabenkern-Sandwichverbund. Beidseits einer wabenförmigen Kernschicht 41 sind Deckschichten 42a, 42b angeordnet, welche auf die Kernschicht aufgeklebt sind. Sowohl die Deckschichten 42a, 42b als auch der Wabenkern 41 sind aus einem Aluminium bzw. einer Aluminiumlegierung.

Fig. 4 zeigt einen Schnitt X-X durch die Verschlussklappe 1 im Bereich des Profilteils 3c und des Eckwinkels 2c (siehe Fig. 1). Das Profilteil 3c enthält wie oben beschrieben eine erste 6, zweite 12 und dritte 7 Profilwand. Der Eckwinkel 2c ist mittels stiftförmigen Positionierhilfen 51 auf der Plattenoberfläche positioniert. Die erste Profilwand 6 des Profilteils 3c enthält an ihrer freien zur Plattenkante gerichteten Längskante eine Anschlussstruktur 50 für eine Scharnierverbindung, welche die Plattenkante um ein gewisses Mass überragt. Die Anschlussstruktur 50 enthält eine Anformung mit einem oder mehreren, querschnittlich ringförmigen Durchgängen zum Einführen eines Scharnier-Stiftes und Anschliessen einer komplementären Anschlussstruktur zwecks Herstellung einer Scharnierverbindung zur Fahrzeugstruktur (nicht gezeigt).

## Patentansprüche

1. Verschlussklappe (11), enthaltend ein Klappenelement (1) und eine auf dem Klappenelement (1) angeordnete Verstärkungsstruktur,
**dadurch gekennzeichnet, dass**
die Verstärkungsstruktur einzeln auf das Klappenelement (1) aufgebrachte Rahmenelemente (2a, 2b, 2c, 2d, 3a, 3b, 3c, 3d) umfasst, welche zu einer Rahmenstruktur verbunden sind.

2. Verschlussklappe nach Anspruch 1, wobei die Rahmenelemente Eckelemente (2a, 2b, 2c, 2d) und längslaufende Profilteile (3a, 3b, 3c, 3d) umfassen.

3. Verschlussklappe nach Anspruch 2, wobei die Eckelemente (2a, 2b, 2c, 2d) über eine Klebverbindung mit dem Klappenelement (1) verbunden sind.

4. Verschlussklappe nach einem der Ansprüche 2 bis 3, wobei die Profilteile (3a, 3b, 3c, 3d) über eine Klebverbindung mit den Eckelementen (2a, 2b, 2c, 2d) und/oder dem Klappenelement (1) verbunden sind.

5. Verschlussklappe nach einem der Ansprüche 1 bis 4, wobei das Klappenelement (1) aus einem mehrschichtigen Plattenmaterial, insbesondere aus einer Sandwich-Platte (40), besteht.

6. Verschlussklappe nach einem der Ansprüche 1 bis 5, wobei das Klappenelement (1) aus einer Verbundplatte (40), umfassend einen wabenförmigen Kern (41) sowie beidseitig mittels Klebverbindungen mit dem Kern (41) verbundene Deckschichten (42a, 42b), insbesondere Deckbleche, ist.

7. Verschlussklappe nach Anspruch 6, wobei der wabenförmige Kern (41) und/oder eines oder beide Deckbleche (42a, 42b) aus Aluminium oder einer Aluminiumlegierung sind.

8. Verschlussklappe nach einem der Ansprüche 2 bis 7, wobei die Eckelemente (2a, 2b, 2c, 2d) Eckwinkel, insbesondere Eckwinkel von U-förmigem Querschnitt, sind.

9. Verschlussklappe nach einem der Ansprüche 2 bis 8, wobei die Profilteile (3a, 3b, 3c, 3d) Profilleisten, vorzugsweise Winkelleisten sind.

10. Verschlussklappe nach einem der Ansprüche 2 bis 9, wobei die Profilleisten (3a, 3b, 3c, 3d) wenigstens zwei Profilwände ausbilden, und eine erste Profilwand (6) parallel zur Plattenoberfläche verläuft und der Plattenoberfläche anliegt und eine zweite Profilwand (12) in einem Winkel, vorzugsweise in einem rechten Winkel, zur ersten Profilwand (6) liegt und von der Plattenoberfläche absteht.

11. Verschlussklappe nach einem der Ansprüche 2 bis 10, wobei die Profilleisten (3a, 3b, 3c, 3d) dritte Profilwände (7) ausbilden, welche parallel zu den ersten Profilwänden (6) verlaufen und gegenüber den ersten Profilwänden (6) in entgegengesetzter Richtung von den zweiten Profilwänden (12) abgewinkelt sind, wobei die ersten und dritten Profilwände über die zweiten Profilwände zu einem Z-Profil miteinander verbunden sind.

12. Verschlussklappe nach einem der Ansprüche 2 bis 11, wobei die Profilteile (3a, 3b, 3c, 3d) und/oder die Eckelemente (2a, 2b, 2c, 2d) aus Aluminium oder einer Aluminiumlegierung sind.

13. Verschlussklappe nach einem der Ansprüche 2 bis 12, wobei die Eckelemente (2a, 2b, 2c, 2d) und Profilteile (3a, 3b, 3c, 3d) zu einer rechteckförmigen Rahmenstruktur gefügt sind, wobei jeder Ecke der Rahmenstruktur ein Eckelement (2a, 2b, 2c, 2d) zugeordnet ist.

14. Verschlussklappe nach einem der Ansprüche 2 bis 13, wobei ein Profilteil (3d) der Rahmenstruktur, insbesondere eine parallel zur Plattenoberfläche verlaufende Profilwand des Profilteils (3d), eine Anschlussstruktur für eine Drehgelenkverbindung, insbesondere für ein Scharnier, ausbildet.

15. Verfahren zur Herstellung einer Verschlussklappe nach einem der Ansprüche 1 bis 14, **gekennzeichnet durch** folgende Schritte:
- Bereitstellen eines Klappenelementes (1);
- Aufsetzen und Positionieren der einzelnen Rahmenelemente (2a, 2b, 2c, 2d) auf das Klappenelement;
- Verkleben der Rahmenelemente (2a, 2b, 2c, 2d) mit dem Klappenelement (1) und/oder mit den benachbarten Rahmenelementen zu einer Rahmenstruktur.

16. Verfahren zur Herstellung einer Verschlussklappe nach Anspruch 15, **gekennzeichnet durch** folgende Schritte:
- Bereitstellen eines Klappenelementes (1);
- Aufsetzen und Positionieren der Eckelemente (2a, 2b, 2c, 2d) auf das Klappenelement (1);
- Verkleben der Eckelemente (2a, 2b, 2c, 2d) mit dem Klappenelement (1);
- Aufsetzen und Positionieren der Profilteile (3a, 3b, 3c, 3d) auf das Klappenelement (1);
- Verkleben der Profilteile (3a, 3b, 3c, 3d) mit den Eckelementen (2a, 2b, 2c, 2d) und/oder dem Klappenelement (1).

17. Verfahren nach einem der Ansprüche 15 bis 16, wobei im Klappenelement (1) Ausnehmungen, insbesondere Bohrungen, zur Einbringung von Positionierhilfen zwecks Positionierung von Rahmenelementen, insbesondere der Eckelemente (2a, 2b, 2c, 2d), auf dem Klappenelement (1) angebracht werden.

18. Verfahren nach einem der Ansprüche 15 bis 17, wobei Positionierhilfen in die Ausnehmungen im Klappenelement oder an den vorgesehenen Rahmenteilen angebracht werden.

19. Verfahren nach einem der Ansprüche 17 bis 18, wobei die Positionierhilfen zur Positionierung von Rahmenelementen, insbesondere der Eckelemente (2a, 2b, 2c, 2d), durch Öffnungen, insbesondere Bohrungen, in den Rahmenelementen sowie in die Ausnehmungen im Klappenelement greifen.

20. Verfahren nach einem der Ansprüche 15 bis 19, wobei die mittels Positionierhilfen positionierten Rahmenelemente, insbesondere Eckelemente, mit dem Klappenelement (1) verklebt werden.

21. Verfahren nach einem der Ansprüche 15 bis 20, **gekennzeichnet durch** die zusätzlichen Schritte:
- Aufsetzen und Positionieren eines Versteifungsprofils (4) auf das Klappenelement (1);
- Verkleben des Versteifungsprofils (4) mit dem Klappenelement (1) und/oder den anstossenden Profilteilen (3a, 3b, 3c, 3d).

22. Verfahren nach Anspruch 21, wobei im Plattenelement Ausnehmungen, insbesondere Bohrungen, zur Einbringung von Positionierhilfen zur Positionierung des Versteifungsprofils (4) angebracht werden.

23. Verfahren nach Anspruch 22, wobei die Positionierhilfen zur Positionierung des Versteifungsprofils (4) durch Öffnungen, insbesondere Bohrungen, im Versteifungsprofil (4) greifen.

24. Verfahren nach einem der Ansprüche 21 bis 23, wobei das mittels Positionierhilfen positionierte Versteifungsprofil (4) mit dem Klappenelement (1) verklebt wird.

25. Verwendung der Verschlussklappe nach einem der Ansprüche 1 bis 14 zum Verschliessen einer Öffnung an oder in einem Transportmittel.

26. Verwendung der Verschlussklappe nach Anspruch 25 in der Aussenwand eines Fahrzeuges.

27. Verwendung nach einem der Ansprüche 25 bis 26, wobei das Transportmittel ein Omnibus oder ein Reisebus ist.

28. Verwendung der Verschlussklappe nach einem der Ansprüche 25 bis 27, zum Verschliessen einer Öffnung für einen Stauraum, insbesondere einen Gepäckraum.
